# EUROPEAN PATENT SPECIFICATION

(11) **EP 1 381 487 B1**
(45) Date of publication and mention of the grant of the patent: **21.02.2007**
(21) Application number: 01965146.2
(22) Date of filing: 09.07.2001
(51) Int. Cl.: B23K 1/08

(54) **APPLIANCE FOR IMPROVED INERTIZING DURING WAVE SOLDERING**
VORRICHTUNG ZUR VERBESSERTEN INERTISIERUNG BEIM WELLENLÖTEN
APPAREIL PERMETTANT DE MIEUX RENDRE INERTE L'ATMOSPHERE AU COURS DE LA SOUDURE A VAGUE

(30) Priority: 11.07.2000 DE 10033522
(43) Date of publication of application: 21.01.2004
(73) Proprietor: L'air Liquide, S.A. à Directoire et Conseil de Surveillance pour l'Etude et l'Exploitation des Procédés Georges Claude, 75321 Paris Cedex 07 (FR); Air Liquide GmbH, 40235 Düsseldorf (DE)
(72) Inventor: HEINE, Fernand, B-4540 Amay (BE)
(74) Representative: Mellul-Bendelac, Sylvie Lisette
(86) International application number: PCT/EP2001/008697
(87) International publication number: WO 2002/004161

(56) References cited:
- US-A- 5 048 746
- US-A- 5 411 200
- US-A- 5 568 894

## Description

The present invention proceeds from an appliance for inertizing the interior of machines which operate on the wave-soldering principle, also being designated as wave-soldering plants, and which are used to a great extent, for example for the soldering of electrical printed circuit boards. In this context, a wave of liquid solder is generated above a solder reservoir by means of a "conveying" device and heating elements, in such a way that continuous workpieces, such as, for example, printed circuit boards with electrical components, which are led over the wave, can come into contact with the solder and thus be soldered on an industrial scale.

One problem, here, is that an atmosphere which is as low in oxygen as possible must be generated, at least during the soldering operation, in order, on the one hand, to avoid the solder or the solder alloy being oxidized and, on the other hand to obtain a high soldering quality which may be impaired, for example, by oxides on the metal surface of the printed circuit boards.

It is sufficiently known, in this context, to prevent oxidation of the solder by means of a protective gas, that is to say an inert gas, which emerges from diffusers in the region of the wave. For example, US 5,121,874 discloses an inertizing system for wave-soldering plants, in which an inert atmosphere is produced in the vicinity of the generated solder wave by means of porous tubes which run parallel to the wave and through which inert gas emerges.

A low-oxygen atmosphere is thereby obtained above the solder wave and on the underside of the printed circuit boards to be soldered. One disadvantage of this is that the porous tubes are exposed to the risk of contamination by splashes of solder, and, moreover, there are wave-soldering machines in which sufficient inertizing of all the machine regions by means of protective gas is not possible for reasons of space, for example, because two solder waves are closely adjacent to one another.

It is known, furthermore, by means of an oil layer which covers the solder over a large area in a solder reservoir, to prevent oxidation reliably, even in the region outside the solder wave (see, for example, the machines of the Swiss manufacturer KIRSTEN). However, additional devices, such as an oil feed pump, oil separator or oil filter, are necessary for this purpose, thus greatly increasing outlay in terms of apparatus. The use of oil also makes it more difficult to clean the machine after it has been used. Moreover, there are disadvantages as regards pollution of the environment when oil or a combination of oil and inert-gas diffusers is used in such inertizing appliances.

From US 5,816,474 a linear motor pump for a wave soldering apparatus is also known. Such a linear motor pump allows to produce a very dynamic solder wave, which is higher than waves produced by mechanical pumps and has some advantageous properties. However, these properties so far did not allow to protect the solder from oxidation by a gas atmosphere, but made a layer of oil necessary on the solder surface. This required additional equipment to maintain the oil layer and made the use of the system more complicated.

The object of the present invention, therefore, is to provide an inertizing appliance, by means of which complete inertizing of wave-soldering plants is possible in a simple way in design terms and so as to save space and be ecologically compatible.

It is also an object of the present invention, to provide a device for inertisation, which allows a complete inertisation of a wave soldering device, especially with a linear motor pump, in a simple, space saving and ecologically acceptable way. This object is achieved by means of the ware soldering plant having the features of Patent Claim 1 and the method according to claim 11. Advantageous refinements and developments are the subject-matter of the sub-claims.

As a result of the flow-off plate which has the row of holes provided in the wave direction and which is designed, with regard to the gas diffuser and respective wave of the wave-soldering machine, in such a way that inert gas can also pass from the diffuser underneath the solder wave, it becomes unnecessary to use an oil layer on the solder in the reservoir. Complete inertizing of the atmosphere is thus possible solely by the diffusers by means of protective gas, such as, for example, cryogenic nitrogen. The fully inertizing system thus provided has a simpler and spatially more compact design and can therefore be used even under confined conditions of space. Inert gas acts upon the solder wave from above and from below at the same time, with the result that it is possible to use even solder alloys without lead which impose particularly stringent requirements as regards the degree of inertizing.

Environmental pollution by the oil which is otherwise necessary is avoided. Moreover, a loss of solder in the process due to oxidation is reduced considerably, since the solder wave is surrounded as a whole and on all sides by a protective-gas atmosphere.

According to an advantageous refinement of the invention, the diffuser is a porous tube which is connected to a gas line and which is provided with a cage-like protective housing. This prevents in a simple way the situation where individual drops of solder which could pass through the holes of the row of holes would contaminate the diffuser and therefore be increasingly detrimental to a sufficient spread of inert gas. The diameter of the porous tube may be coordinated with the respective machine and therefore with the size of the wave, and it is advantageous to use as thin a tube as possible under confined conditions of space.

According to a further advantageous refinement of the invention, the diffuser and the gas line are fastened to lateral holding plates and together form a unit such as can be dipped as a dip box into the solder reservoir or the interior of a wave-soldering plant. As a result, the entire inertizing system can be produced as a compact unit and can be removed in a simple way from the soldering plant for cleaning purposes and for maintenance.

According to a further advantageous refinement of the invention, the plate has two parallel rows of long holes. The distribution of inert gas underneath the wave is thereby improved. The gas atmosphere can therefore be formed more easily, that is to say even with less gas, in the region underneath the wave, in spite of the flow-off plate which is located in between.

According to a relevant refinement of the invention, the two rows of long holes are offset to one another. Since the holes are therefore offset to one another, this ensures that gas can flow in the direction of the underside of the wave over the entire width of the latter. There is therefore no region of the solder flowing past which is deprived of inertizing. The soldering result is thus of high soldering quality and oxidation is avoided even more reliably.

According to a further advantageous refinement of the invention, the diffuser is arranged so as to be laterally offset to the row of holes in the direction of formation of the wave. This prevents the diffuser from being contaminated by solder drops which could pass through the holes in the plate, without the gas distribution underneath the wave being impaired.

According to a further advantageous refinement of the invention, the width of the row of holes and/or the number of rows of holes arranged next to one another are coordinated with the height and length of the solder wave. Thus, when the wave form is different in different machines, the inertizing appliance can be coordinated optimally with the respective machines. It is also conceivable for the rows of holes to be made variably adjustable in width by means of corresponding slides. The person skilled in the art is aware of measures which are customary for this purpose.

According to a further advantageous refinement of the invention, a protective plate is provided between the diffuser and the row of holes. The protective plate is, in this case, to be arranged in such a way that no splashes of solder can reach the porous tube, so as to prevent gas outflow pores from being blocked and, nevertheless, allow a sufficient quantity of gas to flow out underneath the wave. The inert atmosphere can thus be maintained in a more constant manner and impairments in the soldering quality due to any oxidation are reliably prevented.

According to a further advantageous refinement of the invention, additional diffusers for inert gas are provided below the workpiece to be soldered and above the solder wave. The entire interior of the wave-soldering plant can therefore be filled in a simple way, both above and below the wave, with an atmosphere which is as low in oxygen as possible.

An exemplary embodiment of the invention will be described in detail, then, with reference to the drawing in which:
- Figure 1: shows a diagrammatic illustration of a wave-soldering plant according to the invention in an oblique top view; and
- Figure 2: shows a side view of the system for improved inertizing from Figure 1 in detail in order to illustrate the principle of the invention.

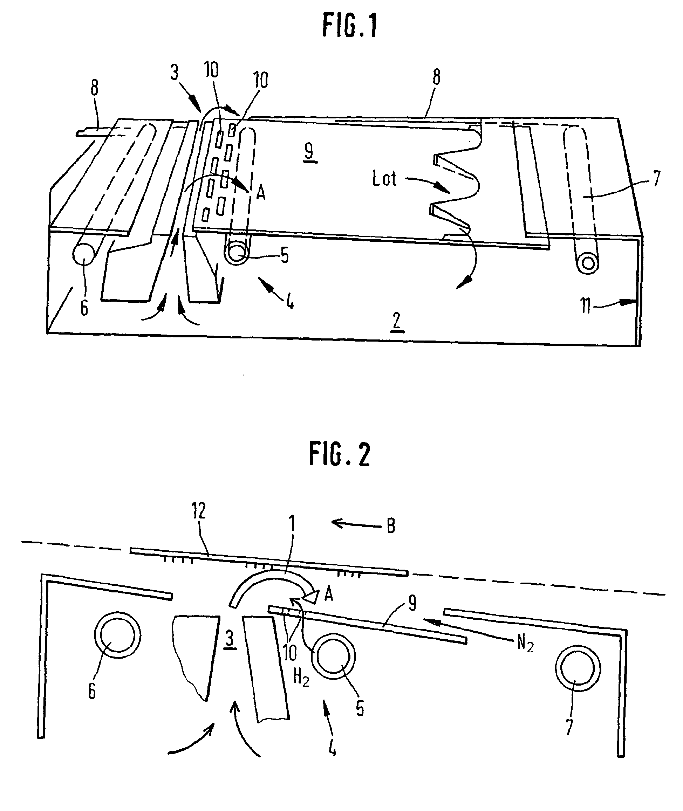

An exemplary embodiment of the invention is illustrated in simplified form in an oblique top view in Figure 1. A solder wave 1 is formed in wave-soldering plants from the liquid solder in the solder reservoir 2, via a wave-forming orifice 3, by means of a solder-conveying device not illustrated in the figure, in such a way that a workpiece, that is to say an electrical printed circuit board 12, led along a track, can be soldered on its underside by the solder wave 1. In order to prevent the oxidation of the solder and of the metal parts of the printed circuit board, an atmosphere which is as low in oxygen as possible must be generated inside the soldering plant. An inertizing system 4, which operates with inert gas, for example cryogenic nitrogen, is provided for this purpose. The inertizing system 4 consists of tubular gas diffusers 5, 6, 7 which are supplied with the inert gas, for example industrial nitrogen, via gas lines 8.

In this exemplary embodiment, there are three gas diffusers 5, 6, 7, a central gas diffuser 5 being provided near to and below the wave 1 and two additional diffusers 6, 7 supplying inert gas to the remaining region of the plant. The wave 1 extends in a wave direction A, at the same time brushes with the wave crest against workpieces which are led over the plant and then pours onto a solder flow-off plate 9, via which the solder is led back into the reservoir 2.

In this exemplary embodiment, the plate 9 has two parallel rows 10 of long holes which lie essentially underneath the formed wave 1. Inert gas also passes through the long holes of the rows of holes 10 through the plate 9 underneath the wave crest. This is because the central gas diffuser 5 is arranged in relation to the rows of holes 10 in such a way that gas flowing out of it not only passes downwards in the direction of the reservoir, but also, above all, into the region underneath the solder wave 1. As a result, the entire interior of the plant, which is delimited diagrammatically in Figure 1 by the housing 11, is filled with a low-oxygen atmosphere, without a covering layer of oil on the liquid solder being necessary. It goes without saying that, in the case of a plurality of solder waves, corresponding rows of holes and diffusers must be provided in each case in order to implement the invention.

Figure 2 is a side view of a detail of the appliance from Figure 1 to illustrate the principle of the inertizing according to the invention. The solder wave 1, which is formed at the wave-forming orifice 3 in the direction A by a conveying device not illustrated in the figure, comes into contact at its crest with an electrical printed circuit board 12 led along a track in the direction B and having soldering joints to be soldered. The gas diffusers 6 and 7 ensure that the solder wave 1 is inertized from outside and the printed circuit board 12 from below by means of nitrogen. By contrast, the central gas diffuser 5 is responsible, on the one hand, for the inertizing of the reservoir 2 and, on the other hand, for the underside of the solder wave 1. This is possible due to the two rows of holes 10 which are located at the outer end of the solder flow-off plate 9 and, according to the invention, are coordinated with the respective waveform. In this way, the entire interior of the soldering plant is filled with a low-oxygen atmosphere solely by means of the inert gas, this not only affording advantages in the use of lead-free solder alloys, but also entailing improved purity in the soldering of printed circuit boards and greater environmental compatibility. It goes without saying that the exemplary embodiment described serves merely to illustrate the claimed invention and is intended also to embrace variants within the scope of protection of the claims, such as for example, differently shaped holes of the rows of holes or another type of diffuser.

### List of reference symbols

- 1: solder wave
- 2: solder reservoir
- 3: wave-forming orifice
- 4: inertizing system
- 5,6,7: gas diffuser
- 8: gas lines
- 9: solder flow-off plate
- 10: row of holes
- 11: housing
- 12: workpiece (electrical printed circuit board)

- A: wave direction
- B: direction of movement of workpiece (printed circuit board)

## Claims

1. Wave-soldering plant, in which liquid solder is put, by a linear motor pump, into at least one solder wave (1) for the soldering of workpieces (12), and including a solder reservoir (2) and a solder flow-off plate (9), which is arranged in relation to a wave-forming orifice (3), and with at least one diffuser (5, 6, 7) for inert gas, **characterized in that** at least one diffuser (5) is arranged below the plate (9) in the region of the wave (1), and **in that** said at least one diffuser allows feeding inert gas into the system such that inert gas is also fed into the space below the solder wave, such that inert gas acts upon the solder wave from below.

2. Wave-soldering plant according to Claim 1, **characterized in that** the plate (9) has in the wave direction A at least one transversely running row of holes (10) which is designed in relation to the diffuser (5) and the wave (1) in such a way that inert gas passes underneath the solder wave (1).

3. Wave-soldering plant according to Claim 1 or 2, **characterized in that** the diffuser (5, 6, 7) is a porous tube which is connected to a gas line (8) and which is provided with a cage-like protective housing.

4. Wave-soldering plant according to one of Claims 1 to 3, **characterized in that** the diffuser (5, 6, 7) and the gas line (8) are fastened to lateral holding plates and together form a unit such as can be dipped as a dip box into the solder reservoir (2) of a wave-soldering plant.

5. wave-soldering plant according to one of the preceding claims, **characterized in that** the plate (9) has two parallel rows (10) of long holes.

6. Wave-soldering plant according to Claim 5, **characterized in that** the long holes of the two rows (10) are offset to one another.

7. Wave-soldering plant according to one of the preceding claims, **characterized in that** the diffuser (5) is arranged so as to be laterally offset to the row of holes (10) in the wave direction A.

8. Wave-soldering plant according to one of the preceding claims, **characterized in that** the width of the row of holes (10) and/or the number of rows of holes (10) arranged next to one another are coordinated with the height and length of the wave (1).

9. Wave-soldering plant according to one of the preceding claims, **characterized in that** a protective plate is provided between the diffuser (5) and the row of holes (10).

10. Wave-soldering plant according to one of the preceding claims, **characterized in that** additional diffusers are provided below the workpiece (12) to be soldered and above the wave (1).

11. Method for wave soldering, in a wave-soldering plant, in which liquid solder is put, by a linear motor pump, into at least one solder wave (1) for the soldering of workpieces (12), and including a solder reservoir (2) and a solder flow-off plate (9), which is arranged in relation to a wave-forming orifice (3), **characterized in that** a protection from oxidation of the solder wave is implemented by feeding inert gas into the system such that inert gas is also fed into the space below the solder wave, such that inert gus acts upon the solder wave from below.

## Patentansprüche

1. Wellenlötvorrichtung, bei der flüssiges Lot durch eine lineare Motorpumpe in mindestens eine Lotwelle (1) gegeben wird, zum Löten von Werkstücken (12), umfassend einen Lotbehälter (2) und eine Lot-Abfließplatte (9), die in Bezug auf eine Wellen bildende Öffnung (3) angeordnet ist und mit mindestens einem Verteiler (5, 6, 7) für Schutzgas, **dadurch gekennzeichnet, dass** mindestens ein Verteiler (5) unter der Platte (9) in der Zone der Welle (1) angeordnet ist, und dass der mindestens eine Verteiler das Zuführen von Schutzgas in das System erlaubt, so dass Schutzgas auch in den Raum unter der Lotwelle gespeist wird, so dass Schutzgas auf die Lotwelle von unten her einwirkt.

2. Wellenlötvorrichtung nach Anspruch 1, **dadurch gekennzeichnet, dass** die Platte (9) in der Wellenrichtung A mindestens eine quer laufende Reihe von Löchern (10) hat, die in Bezug auf den Verteiler (5) und die Welle (1) so konzipiert ist, dass Schutzgas unter der Lotwelle (1) verläuft.

3. Wellenlötvorrichtung nach Anspruch 1 oder 2, **dadurch gekennzeichnet, dass** der Verteiler (5, 6, 7) eine porige Röhre ist, die an eine Gasleitung (8) angeschlossen und mit einem käfigartigen Schutzgehäuse versehen ist.

4. Wellenlötvorrichtung nach einem der Ansprüche 1 bis 3, **dadurch gekennzeichnet, dass** der Verteiler (5, 6, 7) und die Gasleitung (8) an seitlichen Halteplatten befestigt sind und gemeinsam eine Einheit bilden, die wie eine Tauchbox in den Lotbehälter (2) einer Wellenlötvorrichtung getaucht werden kann.

5. Wellenlötvorrichtung nach einem der vorhergehenden Ansprüche, **dadurch gekennzeichnet, dass** die Platte (9) zwei parallele Reihen (10) langer Löcher hat.

6. Wellenlötvorrichtung nach Anspruch 5, **dadurch gekennzeichnet, dass** die langen Löcher der zwei Reihen (10) voneinander versetzt sind.

7. Wellenlötvorrichtung nach einem der vorhergehenden Ansprüche, **dadurch gekennzeichnet, dass** der Verteiler (5) so eingerichtet ist, um seitlich zu der Reihe von Löchern (10) in der Wellenrichtung A versetzt zu sein.

8. Wellenlötvorrichtung nach einem der vorhergehenden Ansprüche, **dadurch gekennzeichnet, dass** die Breite der Reihe von Löchern (10) und/oder die Anzahl der Reihen von Löchern (10), die nebeneinander eingerichtet sind, mit der Höhe und Länge der Welle (1) koordiniert sind.

9. Wellenlötvorrichtung nach einem der vorhergehenden Ansprüche, **dadurch gekennzeichnet, dass** eine Schutzplatte zwischen dem Verteiler (5) und der Reihe von Löchern (10) bereitgestellt ist.

10. Wellenlötvorrichtung nach einem der vorhergehenden Ansprüche, **dadurch gekennzeichnet, dass** zusätzliche Verteiler zwischen dem zu lötenden Werkstück (12) und über der Welle (1) bereitgestellt sind.

11. Verfahren zum Wellenlöten in einer Wellenlötvorrichtung, in die flüssiges Lot von einer linearen Motorpumpe in mindestens eine Lotwelle (1) zum Löten von Werkstücken (12) gegeben wird, umfassend einen Lotbehälter (2) und eine Lot-Abfließplatte (9), die in Bezug auf eine Wellen bildende Öffnung (3) angeordnet ist, **dadurch gekennzeichnet, dass** ein Schutz vor Oxidation der Lotwelle umgesetzt wird, indem Schutzgas in das System zugeführt wird, so dass Schutzgas auch in den Raum unter der Lotwelle gespeist wird, so dass Schutzgas auf die Lotwelle von unten einwirkt.

## Revendications

1. Installation de soudure à la vague, dans laquelle du métal d'apport liquide est mis, par une pompe à moteur linéaire, sous la forme d'au moins une vague de métal d'apport (1) pour la soudure de pièces de travail (12), et comprenant un réservoir de métal d'apport (2) et une plaque de déversement de métal d'apport (9) qui est agencée par rapport à un orifice de formation de vagues (3), et dotée d'au moins un diffuseur (5, 6, 7) pour gaz inerte, **caractérisée en ce qu'**au moins un diffuseur (5) est agencé au-dessous de la plaque (9) dans la région de la vague (1) et **en ce que** ledit au moins un diffuseur permet d'amener du gaz inerte dans le système de telle sorte que du gaz inerte soit également amené dans l'espace au-dessous de la vague de métal d'apport, de telle sorte que le gaz inerte agisse sur la vague de métal d'apport par le dessous.

2. Installation de soudure à la vague selon la revendication 1, **caractérisée en ce que** la plaque (9) est dotée, dans la direction A de la vague, d'au moins une rangée orientée transversalement de trous (10), conçue par rapport au diffuseur (5) et à la vague (1) de telle façon que du gaz inerte passe sous la vague de métal d'apport (1).

3. Installation de soudure à la vague selon la revendication 1 ou 2, **caractérisée en ce que** le diffuseur (5, 6, 7) est un tube poreux relié à une canalisation de gaz (8) et pourvu d'un boîtier protecteur semblable à une cage.

4. Installation de soudure à la vague selon l'une des revendications 1 à 3, **caractérisée en ce que** le diffuseur (5, 6, 7) et la canalisation de gaz (8) sont fixés à des plaques latérales de maintien et forment ensemble une unité susceptible d'être plongée en tant que bac d'immersion dans le réservoir de métal d'apport (2) d'une installation de soudure à la vague.

5. Installation de soudure à la vague selon l'une des revendications précédentes, **caractérisée en ce que** la plaque (9) est dotée de deux rangées parallèles (10) de trous allongés.

6. Installation de soudure à la vague selon la revendication 5, **caractérisée en ce que** les trous allongés des deux rangées (10) sont décalés les uns par rapport aux autres.

7. Installation de soudure à la vague selon l'une des revendications précédentes, **caractérisée en ce que** le diffuseur (5) est agencé de façon à être latéralement décalé par rapport à la rangée de trous (10) dans la direction A de la vague.

8. Installation de soudure à la vague selon l'une des revendications précédentes, **caractérisée en ce que** la largeur de la rangée de trous (10) et/ou le nombre de rangées de trous (10) agencés les uns à côté des autres sont coordonnés à la hauteur et à la longueur de la vague (1).

9. Installation de soudure à la vague selon l'une des revendications précédentes, **caractérisée en ce qu'**une plaque protectrice est mise en place entre le diffuseur (5) et la rangée de trous (10).

10. Installation de soudure à la vague selon l'une des revendications précédentes, **caractérisée en ce que** des diffuseurs supplémentaires sont mis en place au-dessous de la pièce de travail (12) à souder et au-dessus de la vague (1).

11. Procédé de soudure à la vague, dans une installation de soudure à la vague, dans lequel du métal d'apport liquide est mis, par une pompe à moteur linéaire, sous la forme d'au moins une vague de métal d'apport (1) pour la soudure de pièces de travail (12), et comprenant un réservoir de métal d'apport (2) et une plaque de déversement de métal d'apport (9) qui est agencée par rapport à un orifice de formation de vagues (3), **caractérisé en ce qu'**une protection contre l'oxydation de la vague de métal d'apport est mise en oeuvre en amenant du gaz inerte dans le système de telle sorte que du gaz inerte soit également amené dans l'espace au-dessous de la vague de métal d'apport, de telle sorte que le gaz inerte agisse sur la vague de métal d'apport par le dessous.
